# EUROPÄISCHE PATENTSCHRIFT

(11) **EP 4 059 814 B1**
(45) Veröffentlichungstag und Bekanntmachung des Hinweises auf die Patenterteilung: **18.10.2023**
(21) Anmeldenummer: 22161379.7
(22) Anmeldetag: 10.03.2022
(51) Int. Cl.: B62D 7/04, B62D 7/15, G05B 13/02, B62D 5/04

(54) **VERFAHREN ZUM BETREIBEN EINES AKTUATORS FÜR EIN KRAFTFAHRZEUG SOWIE EIN ENTSPRECHENDER AKTUATOR**
METHOD FOR OPERATING AN ACTUATOR FOR A MOTOR VEHICLE AND A CORRESPONDING ACTUATOR
PROCÉDÉ DE FONCTIONNEMENT D'UN ACTIONNEUR POUR UN VÉHICULE AUTOMOBILE ET ACTIONNEUR CORRESPONDANT

(30) Priorität: 17.03.2021 DE 102021202587
(43) Veröffentlichungstag der Anmeldung: 21.09.2022
(73) Patentinhaber: Audi AG, 85057 Ingolstadt (DE); Dr. Ing. h.c. F. Porsche Aktiengesellschaft, 70435 Stuttgart (DE)
(72) Erfinder: Mihailescu, Adrian, 85049 Ingolstadt (DE); Baber, Moritz, 70565 Stuttgart (DE)
(74) Vertreter: Dietz, Christopher Friedrich

(56) Entgegenhaltungen:
- EP-A1- 3 409 562
- EP-B1- 2 164 746

## Beschreibung

Die Erfindung betrifft ein Verfahren zum Betreiben eines Aktuators für ein Kraftfahrzeug mittels eines Steuergeräts, wobei der Aktuator über eine Stelleinheit, einen Stellantrieb und einen Signaleingang verfügt, wobei ein Istwert des Stellantriebs in Abhängigkeit von einem von dem Steuergerät über den Signaleingang empfangenen Sollwert und einem in dem Aktuator gespeicherten Schwellenwert eingestellt wird, wobei der Schwellenwert eine Grenze des Betriebsbereichs des Aktuators definiert, welche von dem Istwert des Stellantriebs nicht überschritten werden darf. Die Erfindung betrifft weiterhin einen Aktuator für ein Kraftfahrzeug.

Aus dem Stand der Technik ist beispielsweise die Druckschrift WO 97/39905 A1 bekannt. Diese beschreibt ein aktives Federungssystem, insbesondere für Fahrzeuge mit Abstützaggregaten, die jeweils ein aktiv hubverstellbares Stellorgan und eine dazu in Reihe angeordnete passive Feder sowie vorzugsweise einen zumindest parallel zur Feder angeordneten Dämpfer aufweisen. Durch verschiedene Beschleunigungssensoren können Hub-, Nick-, Wank-, Längs- und Querbeschleunigung des Aufbaus ermittelt werden. Mittels Wegsensoren werden die Hubstellungen der Abstützaggregate registriert. Beschrieben wird eine Signalauswertung, die das Erreichen einer vorgebbaren Federungscharakteristik ermöglicht.

Die Druckschrift EP 2 164 746 B1 beschreibt eine Lenkvorrichtung zum Einstellen eines Radeinschlagwinkels eines Rades eines Kraftfahrzeugs, welche ein Radführungsglied (15) und ein Lenkungssteuergerät aufweist. Das Lenkungssteuergerät umfasst hierbei eine Grundlenkfunktion und eine Aktuatorwegregelung zur Einstellung eines Weges des Radführungsgliedes auf Basis eines Lenkwinkelsollwertes.

Aus dem Stand der Technik ist weiterhin die Druckschrift EP 3 409 562 A1 bekannt.

Es ist Aufgabe der Erfindung, ein Verfahren zum Betreiben eines Aktuators für ein Kraftfahrzeug vorzuschlagen, welches gegenüber bekannten Verfahren Vorteile aufweist, insbesondere ein Verbauen des Aktuators in unterschiedliche Kraftfahrzeuge beziehungsweise für unterschiedliche Kraftfahrzeugbaureihen ermöglicht, ohne den Aktuator an das jeweilige Kraftfahrzeug anzupassen.

Dies wird erfindungsgemäß mit einem Verfahren zum Betreiben eines Aktuators für ein Kraftfahrzeug mit den Merkmalen des Anspruchs 1 und einem Aktuator mit den Merkmalen des Anspruchs 8 erreicht. Dabei ist vorgesehen, dass der Schwellenwert gleich dem Sollwert gesetzt wird, falls der Sollwert den Betriebsbereich verlässt.

Vorteilhafte Ausgestaltungen mit zweckmäßigen Weiterbildungen der Erfindung sind in den abhängigen Ansprüchen angegeben.

Der Aktuator dient dem mechanischen Einstellen beziehungsweise dem mechanischen Antreiben einer Einrichtung des Kraftfahrzeugs. Hierzu verfügt der Aktuator über den Stellantrieb, mittels welchem ein Antriebsdrehmoment erzeugbar ist beziehungsweise zumindest zeitweise erzeugt wird. Der Stellantrieb liegt beispielsweise in Form eines Elektromotors vor. Zusätzlich kann der Stellantrieb über ein optionales Getriebe verfügen. Zum Ansteuern des Aktuators verfügt dieser über den Signaleingang. Über den Signaleingang wird dem Aktuator ein Sollwert zugeführt, beispielsweise von einem Steuergerät. Nach dem Empfangen des Sollwerts wird der Stellantrieb betrieben, bis der Istwert des Aktuators dem Sollwert entspricht. Unter dem Istwert und dem Sollwert sind beispielsweise Stellungen, insbesondere Drehwinkelstellungen, des Aktuators beziehungsweise des Stellantriebs und/oder der mittels des Aktuators einzustellenden Einrichtung oder äquivalente Werte zu verstehen.

Bei dem Betreiben des Stellantriebs wird zusätzlich zu dem Sollwert der Schwellenwert herangezogen. Der Schwellenwert dient einer Definition des Betriebsbereichs des Aktuators, also desjenigen Bereichs, innerhalb welchem der Aktuator betreibbar ist beziehungsweise betrieben werden darf. Der Schwellenwert definiert insbesondere eine Grenze des Betriebsbereichs, welche von dem Istwert des Aktuators nicht überschritten werden darf, da ein solches Überschreiten beispielsweise eine Beschädigung des Aktuators und/oder der Einrichtung zur Folge hätte. Beispielsweise ist es während des Betreibens des Stellantriebs vorgesehen, den Stellantrieb rechtzeitig zu deaktivieren, bevor der Istwert den Schwellenwert erreicht. Vorzugsweise ist es jedoch vorgesehen, den Stellantrieb abseits des Schwellenwerts mit höherer Geschwindigkeit und im Bereich des Schwellenwerts mit niedrigerer Geschwindigkeit zu betreiben, sodass einerseits eine hohe Stellgeschwindigkeit des Aktuators und andererseits eine hohe Sicherheit erzielt sind.

Es kann vorgesehen sein, dass der Schwellenwert fest in dem Aktuator hinterlegt ist. Üblicherweise wird der gleiche Aktuator jedoch für unterschiedliche Kraftfahrzeuge, insbesondere für unterschiedliche Kraftfahrzeugbaureihen, eingesetzt. Das bedeutet, dass jeder Aktuator jeweils auf das entsprechende Kraftfahrzeug angepasst werden muss, insbesondere durch das Hinterlegen des Schwellenwerts in dem Aktuator. Dies führt dazu, dass für unterschiedliche Kraftfahrzeuge beziehungsweise Kraftfahrzeugbaureihen Aktuatoren bereitgestellt werden müssen, welche sich ausschließlich hinsichtlich des Schwellenwerts unterscheiden. Das bedeutet, dass für jedes Kraftfahrzeug beziehungsweise jede Kraftfahrzeugbaureihe der jeweilige Aktuator angepasst und mit entsprechender Software versehen werden muss, in welcher der Schwellenwert hinterlegt ist. Hierdurch entstehen hohe Entwicklungskosten und auch Herstellungskosten beziehungsweise Lagerhaltungskosten.

Aus diesem Grund ist es erfindungsgemäß vorgesehen, den Aktuator selbstlernend auszugestalten, sodass sich der Aktuator selbsttätig an das jeweilige Kraftfahrzeug anpasst. Dies wird erzielt, indem der Schwellenwert in Abhängigkeit von dem dem Aktuator über den Signaleingang zugeführten Sollwert gesetzt wird. Liegt der Sollwert außerhalb des von dem bisherigen Schwellenwert definierten Betriebsbereichs des Aktuators, so wird ein neuer Schwellenwert gleich dem Sollwert gesetzt und als Schwellenwert in dem Aktuator gespeichert, wobei der bisherige Schwellenwert ersetzt wird.

Vorzugsweise wird der Aktuator bei seinem Einbau in das Kraftfahrzeug zurückgesetzt, wobei der Schwellenwert auf einen Ausgangswert gesetzt wird. Der Ausgangswert entspricht hierbei einem kleinen, insbesondere minimalen Betriebsbereich des Aktuators, vorzugsweise einem Betriebsbereich von Null. Der gleich dem Ausgangswert gesetzte Schwellenwert ließe insoweit zunächst keine Bewegung des Stellantriebs abseits des Ausgangswerts zu. Sobald jedoch dem Aktuator über den Signaleingang der Sollwert zugeführt wird und dieser außerhalb des von dem Schwellenwert definierten Betriebsbereichs liegt, so wird der Schwellenwert gleich dem Sollwert gesetzt. Entsprechend ist nachfolgend der Istwert bis hin zu dem Sollwert verlagerbar, sodass das Einstellen des Istwerts auf den Sollwert durch entsprechendes Ansprechen des Stellantriebs möglich ist und auch erfolgt.

Das Anpassen des Schwellenwerts an den Sollwert und damit das Einstellen des Aktuators auf seinen zulässigen Betriebsbereich erfolgt insoweit adaptiv beziehungsweise sukzessive. Hierdurch ist es nicht mehr notwendig, den Aktuator auf unterschiedliche Kraftfahrzeuge beziehungsweise Kraftfahrzeugbaureihen anzupassen. Vielmehr erfolgt das Anpassen des Aktuators während des Betriebs des Aktuators in dem Kraftfahrzeug. Entsprechend ergeben sich deutliche Vorteile hinsichtlich der Entwicklung- und Anpassungskosten sowie der Bereitstellungs- und Lagerhaltungskosten.

Insbesondere ist es vorgesehen, den Schwellenwert gleich dem Sollwert zu setzen, falls der Sollwert den Schwellenwert überschreitet oder unterschreitet. Begrenzt der Schwellenwert den Betriebsbereich des Aktuators nach oben, also in Richtung größerer Werte, so wird der Schwellenwert gleich dem Sollwert gesetzt, wenn der Sollwert den Schwellenwert überschreitet. Begrenzt hingegen der Schwellenwert den Betriebsbereich des Aktuators nach unten, also in Richtung kleinerer Werte, so wird der Schwellenwert gleich dem Sollwert gesetzt, wenn der Sollwert den Schwellenwert unterschreitet. Hierdurch wird ein schrittweises Anpassen des Schwellenwerts und mithin des Betriebsbereichs an den über den Signaleingang vorgegebenen Sollwert erreicht.

Vorzugsweise wird der Betriebsbereich des Aktuators von dem Schwellenwert und einem weiteren Schwellenwert definiert. Insbesondere begrenzt hierbei der Schwellenwert in Betriebsbereich in eine erste Richtung und der weitere Schwellenwert in eine von der ersten Richtung verschiedene zweite Richtung. Der Betriebsbereich liegt insoweit zwischen dem Schwellenwert und dem weiteren Schwellenwert vor. Beispielsweise wird der Betriebsbereich in Richtung höherer Werte von dem Schwellenwert und in Richtung niedrigerer Werte von dem weiteren Schwellenwert begrenzt oder umgekehrt. Der Schwellenwert kann auch als erster Schwellenwert und der weitere Schwellenwert als zweiter Schwellenwert bezeichnet werden.

Bei der Verwendung mehrerer Schwellenwerte, also insbesondere dem Schwellenwert und dem weiteren Schwellenwert beziehungsweise dem ersten Schwellenwert und dem zweiten Schwellenwert, ist es insbesondere vorgesehen, bei dem Verlassen des von den Schwellenwerten definierten Betriebsbereichs des Aktuators durch den Sollwert denjenigen Schwellenwert gleich dem Sollwert zu setzen auf dessen Seite der Sollwert den Betriebsbereich verlassen hat. Beispielsweise ist es also vorgesehen, bei einem Überschreiten des Schwellenwerts durch den Sollwert den Schwellenwert gleich dem Sollwert zu setzen und bei einem Unterschreiten des weiteren Schwellenwerts durch den Sollwert den weiteren Schwellenwert gleich dem Sollwert zu setzen oder umgekehrt. Hierdurch wird der Betriebsbereich des Aktuators sukzessive aufgeweitet und die Schwellenwerte an den Bereich, in welchem die Sollwerte auftreten, angepasst.

Eine Weiterbildung der Erfindung sieht vor, dass mit abnehmendem Abstand des Istwerts zu dem Schwellenwert eine Stellgeschwindigkeit des Stellantriebs reduziert wird. Unter der Stellgeschwindigkeit ist diejenige Geschwindigkeit des Stellantriebs zu verstehen, mit welcher der Istwert verändert wird. Liegt der Istwert in Form der Drehwinkelstellung vor, so entspricht die Stellgeschwindigkeit einer Winkelgeschwindigkeit. Bei größerem Abstand des Istwerts zu dem Schwellenwert wird insoweit eine größere Stellgeschwindigkeit gewählt als bei einem kleineren Abstand. Hierdurch wird ein zuverlässiges und genaues Anfahren des Sollwerts durch den Istwert erreicht und insbesondere ein Überfahren des Sollwerts durch den Istwert verhindert. In anderen Worten ist es vorgesehen, die Stellgeschwindigkeit umso weiter zu reduzieren, je geringer der Abstand des Istwerts zu dem Schwellenwert wird. Umgekehrt ist es bevorzugt vorgesehen, die Stellgeschwindigkeit umso weiter zu erhöhen, je größer der Abstand des Istwerts zu dem Schwellenwert wird. Das bedeutet, dass einerseits ein rasches Anfahren des Sollwerts durch den Istwert vorgenommen wird, andererseits jedoch das Verlassen des Betriebsbereichs durch den Istwert zuverlässig unterbunden wird.

Wird der Betriebsbereich durch mehrere Schwellenwerte begrenzt, insbesondere durch den Schwellenwert und den weiteren Schwellenwert, so gilt selbstverständlich, dass mit abnehmendem Abstand zu dem, dem Istwert jeweils am nächsten liegenden der Schwellenwerte die Stellgeschwindigkeit des Stellantriebs reduziert wird. Die höchste Stellgeschwindigkeit liegt insoweit beispielsweise bei einem mittig zwischen den Schwellenwerten liegenden Istwert vor. Die Stellgeschwindigkeit wird abseits dieser höchsten Stellgeschwindigkeit in beide Richtungen, also in Richtung jedes der Schwellenwerte, jeweils reduziert.

Die Stellgeschwindigkeit wird in jedem Fall insbesondere derart reduziert, dass sichergestellt ist, dass der Istwert zuverlässig und genau auf den Sollwert eingestellt wird beziehungsweise eingestellt werden kann. Vorzugsweise wird die Stellgeschwindigkeit jedoch nur soweit reduziert, dass diese Bedingung erfüllt ist, sodass weiterhin ein rasches Einstellen des Istwerts auf den Sollwert vorgenommen werden kann.

Die Erfindung sieht vor, dass der Istwert auf den Schwellenwert begrenzt wird. Hierauf wurde bereits hingewiesen. Der Schwellenwert begrenzt den Betriebsbereich des Aktuators, wobei ein Verlassen des Betriebsbereichs durch den Istwert nicht erwünscht ist und verhindert werden soll. Der Stellantrieb wird daher derart eingestellt beziehungsweise betrieben, dass der Istwert stets innerhalb des Betriebsbereichs liegt, und entsprechend der Istwert den Betriebsbereich nicht verlässt.

Zu Beginn des Betriebs des Aktuators ist insoweit der Stellbereich des Aktuators durch den Schwellenwert begrenzt, wobei die Grenze mit der Zeit aufgeweitet wird. Die beschriebene Vorgehensweise ermöglicht zum einen einen zuverlässigen und sicheren Betrieb des Aktuators unabhängig von dem Kraftfahrzeug beziehungsweise der Kraftfahrzeugbaureihe und zum anderen eine flexible Verwendung des Aktuators durch das Einlernen des Aktuators anhand des Sollwerts.

Eine Weiterbildung der Erfindung sieht vor, dass der gleich dem Sollwert gesetzte Schwellenwert in dem Aktuator in einem nichtflüchtigen Speicher gespeichert wird. Der Schwellenwert beziehungsweise die mehreren Schwellenwerte sollen also derart abgespeichert werden, dass sie einen stromlosen Zustand des Aktuators überdauern. Es ist insoweit nicht vorgesehen, das Einlernen des Aktuators bei jedem Betriebsbeginn des Kraftfahrzeugs erneut vorzunehmen, sondern das Einlernen des Aktuators soll persistent erfolgen beziehungsweise der Schwellenwert beziehungsweise die Schwellenwerte sollen persistent hinterlegt werden. Insbesondere soll der Schwellenwert beziehungsweise sollen die Schwellenwerte persistent über KL15-und/oder KL30-Wechsel gespeichert werden. Unter dem KL15-Wechsel ist ein Aktivieren beziehungsweise Deaktivieren einer Zündung des Kraftfahrzeugs und unter dem KL30-Wechsel ein Aktivieren beziehungsweise Deaktivieren einer Stromversorgung des Kraftfahrzeugs zu verstehen. Zu diesem Zweck ist der Schwellenwert beziehungsweise sind die Schwellenwerte in dem nichtflüchtigen Speicher des Aktuators hinterlegt. Diese Vorgehensweise hat den Vorteil, dass das Einlernen lediglich einmalig erfolgt und nach Abschluss nicht nochmals vorgenommen werden muss.

Eine Weiterbildung der Erfindung sieht vor, dass der Aktuator eine über den Signaleingang empfangene Kennung mit einer in dem Aktuator gespeicherten Kennung vergleicht und bei einer Abweichung der Kennung von der gespeicherten Kennung der Schwellenwert auf einen Ausgangswert zurückgesetzt wird. Unter der Kennung ist beispielsweise ein Identifikation des Kraftfahrzeugs und/oder eines Steuergeräts des Kraftfahrzeugs zu verstehen. Beispielsweise wird die Kennung bei Betriebsbeginn des Kraftfahrzeugs an den Aktuator übermittelt, insbesondere über den Signaleingang. Es kann auch vorgesehen sein, dass die Kennung während des Betriebs des Aktuators beziehungsweise des Kraftfahrzeugs mehrfach, insbesondere regelmäßig, an den Aktuator übertragen wird.

Vorzugsweise ist es vorgesehen, dass die über den Signaleingang empfangene Kennung in dem Aktuator gespeichert wird, sofern noch keine Kennung in dem Aktuator gespeichert ist oder die empfangene Kennung von der gespeicherten Kennung abweicht. Hierdurch wird eine Kopplung des Aktuators mit dem Kraftfahrzeug beziehungsweise dem Steuergerät vorgenommen, sodass nachfolgend der Aktuator erkennen kann, ob er weiterhin zusammen mit dem Kraftfahrzeug beziehungsweise dem Steuergerät betrieben wird oder ob er in ein anderes Kraftfahrzeug eingebaut beziehungsweise an ein anderes Steuergerät angeschlossen wurde.

In jedem Fall wird im Falle des Abspeicherns der Kennung in dem Aktuator der Schwellenwert auf den Ausgangswert zurückgesetzt. Der Ausgangswert ist hierbei insbesondere derart gewählt, dass lediglich ein kleiner Betriebsbereich für den Istwert zugelassen wird, beziehungsweise derart, dass der Aktuator festgesetzt ist. Liegen mehrere Schwellenwerte vor, so kann es vorgesehen sein, dass jeder dieser Schwellenwerte auf denselben Ausgangswert zurückgesetzt wird. Es kann jedoch auch vorgesehen sein, dass für jeden der Schwellenwerte ein separater Ausgangswert hinterlegt ist, wobei diese separaten Ausgangswerte voneinander verschieden sind.

Die beschriebene Vorgehensweise ermöglicht es, den Aktuator flexibel zwischen unterschiedlichen Kraftfahrzeugen zu verwenden und beispielsweise den Aktuator aus einem ersten Kraftfahrzeug auszubauen und in ein zweites Kraftfahrzeug einzubauen. In diesem Fall soll nicht der an das erste Kraftfahrzeug angepasste Betriebsbereich für das Betreiben des Stellantriebs herangezogen werden, sondern der Betriebsbereich soll an das zweite Kraftfahrzeug angepasst werden.

Eine Weiterbildung der Erfindung sieht vor, dass der Aktuator zum Antreiben einer Hinterachslenkung des Kraftfahrzeugs verwendet wird. Das Kraftfahrzeug weist insoweit mehrere lenkbare Achsen auf, nämlich eine lenkbare Vorderachse und eine lenkbare Hinterachse. Während die Vorderachse auf übliche Art und Weise gelenkt wird, ist zum Einstellen eines Lenkwinkels an der Hinterachse der Aktuator vorgesehen. Der Sollwert, der Istwert und der Schwellenwert des Aktuators liegen insoweit vorzugsweise in Form von Lenkwinkeln oder äquivalenten Werten vor. Die beschriebene Vorgehensweise zum Betreiben des Aktuators ermöglicht die Verwendung ein und desselben Aktuators für die Hinterachslenkung unterschiedlicher Kraftfahrzeuge beziehungsweise unterschiedlicher Kraftfahrzeugbaureihen. Eine Anpassung des Aktuators auf das jeweilige Kraftfahrzeug beziehungsweise die jeweilige Kraftfahrzeugbaureihe entfällt insoweit, sodass ein besonders geringer Entwicklungsaufwand erzielt werden kann.

Die Erfindung betrifft weiterhin einen Aktuator für ein Kraftfahrzeug gemäß Anspruch 8. Der Aktuator umfasst eine Stelleinheit, einen Stellantrieb und einen Signaleingang. Dabei ist vorgesehen, dass der Aktuator zur Durchführung des Verfahrens gemäß den Ausführungen im Rahmen der vorliegenden Beschreibung eingerichtet ist.

Auf die Vorteile einer derartigen Ausgestaltung des Aktuators beziehungsweise einer derartigen Vorgehensweise wurde bereits hingewiesen. Sowohl der Aktuator als auch das Verfahren zu seinem Betreiben können gemäß den Ausführungen im Rahmen dieser Beschreibung weitergebildet sein, sodass insoweit auf diese verwiesen wird.

Eine Weiterbildung der Erfindung sieht vor, dass in dem Steuergerät ein Maximalsollwert hinterlegt und der in dem Aktuator hinterlegte Schwellenwert auf einen von dem Maximalsollwert verschiedenen Ausgangswert gesetzt wird. Der Maximalsollwert ist auf das jeweilige Kraftfahrzeug abgestimmt, entspricht also dem für das Kraftfahrzeug maximal einstellbaren Sollwert. Der Ausgangswert ist hingegen derart gewählt, dass der Aktuator für unterschiedliche Kraftfahrzeuge beziehungsweise unterschiedliche Kraftfahrzeugbaureihen einsetzbar ist. Zusammen mit der bereits beschriebenen Vorgehensweise hat dies den Vorteil, dass der Aktuator auf das Steuergerät beziehungsweise das Kraftfahrzeug während seines Betriebs eingelernt wird und entsprechend ein separates Anpassen des Aktuators entfällt.

Eine Weiterbildung der Erfindung sieht vor, dass ein innerhalb eines von dem Maximalsollwert begrenzten Wertebereichs liegender Vorgabewert dem Aktuator als Sollwert übermittelt wird, sodass sich der Schwellenwert dem Maximalsollwert angleicht, insbesondere schrittweise. Während des Betreibens der Anordnung beziehungsweise des Kraftfahrzeugs werden unterschiedliche innerhalb des Wertebereichs liegende Vorgabewerte ausgewählt und an den Aktuator als Sollwert übermittelt. Der Vorgabewert wird beispielsweise anhand eines von einem Fahrer des Kraftfahrzeugs vorgegebenen Lenkwinkels des Kraftfahrzeugs ausgewählt.

Liegt der an den Aktuator übermittelte Sollwert außerhalb des momentan von dem Schwellenwert definierten Betriebsbereichs, so wird der Schwellenwert gleich dem Sollwert gesetzt und anschließend der Stellantrieb zum Anfahren des Sollwerts durch den Istwert betrieben. Hierdurch gleicht sich der Schwellenwert mit der Zeit an den Maximalsollwert an, bis er ihm schlussendlich entspricht.

Es kann vorgesehen sein, dass das Steuergerät bei seiner Inbetriebnahme einen dem Maximalsollwert entsprechenden Vorgabewert an den Aktuator als Sollwert übermittelt. In diesem Fall wird der Schwellenwert unverzüglich gleich dem Maximalsollwert gesetzt. Üblicherweise erfolgt das Angleichen des Schwellenwerts an den Maximalsollwert jedoch während eines normalen Betriebs der Anordnung beziehungsweise des Kraftfahrzeugs, sodass mehrere Schritte notwendig sind, bis der Schwellenwert dem Maximalsollwert entspricht. In jedem Fall wird ein zuverlässiges Angleichen des Schwellenwerts an den Maximalsollwert und entsprechend eine Anpassung des Aktuators an das Kraftfahrzeug erzielt.

Die in der Beschreibung beschriebenen Merkmale und Merkmalskombinationen, insbesondere die in der nachfolgenden Figurenbeschreibung beschriebenen und/oder in den Figuren gezeigten Merkmale und Merkmalskombinationen, sind nicht nur in der jeweils angegebenen Kombination, sondern auch in anderen Kombinationen oder in Alleinstellung verwendbar, ohne den Rahmen der Erfindung zu verlassen. Es sind somit auch Ausführungsformen als von der Erfindung umfasst anzusehen, die in der Beschreibung und/oder den Figuren nicht explizit gezeigt oder erläutert sind, jedoch aus den erläuterten Ausführungsformen hervorgehen oder aus ihnen ableitbar sind.

Die Erfindung wird anhand der in der Zeichnung dargestellten Ausführungsbeispiele näher erläutert, ohne dass eine Beschränkung der Erfindung erfolgt. Dabei zeigt:
- Figur 1: eine schematische Darstellung eines Bereichs eines Kraftfahrzeugs, genauer gesagt einer Anordnung aus einem Aktuator und einem Steuergerät des Kraftfahrzeugs, sowie
- Figur 2: ein Diagramm, in welchem ein an das Steuergerät übermittelte Sollwert, ein Schwellenwert sowie ein weiterer Schwellenwert über der Zeit aufgetragen sind.

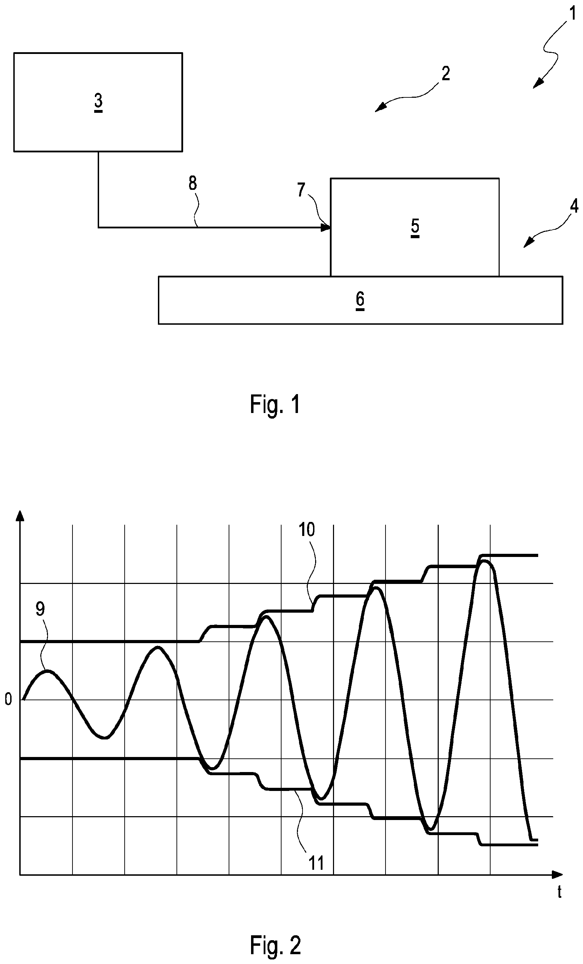

Die Figur 1 zeigt schematisch einen Bereich eines Kraftfahrzeugs 1, nämlich genauer gesagt eine Anordnung 2 des Kraftfahrzeugs 1, die ein Steuergerät 3 des Kraftfahrzeugs 1 sowie einen Aktuator 4 umfasst. Der Aktuator 4 dient insbesondere einer Betätigung einer Hinterachslenkung des Kraftfahrzeugs 1. Er umfasst eine Stelleinheit 5 sowie einen Stellantrieb 6. Die Stelleinheit 5 dient einem Ansprechen des Stellantriebs 6 entsprechend eines Sollwerts, der über einen Signaleingang 7 dem Aktuator 4 von dem Steuergerät 3 zugeführt wird, insbesondere über eine Signalleitung 8. Der Stellantrieb 6 ist für das Bereitstellen einer mechanischen Antriebskraft oder eines mechanischen Antriebsdrehmoments vorgesehen und ausgestaltet. In dem hier dargestellten Ausführungsbeispiel bildet er einen Bestandteil der Hinterachslenkung des Kraftfahrzeugs 1 oder ist zumindest antriebstechnisch mit dieser verbunden.

Es ist vorgesehen, dass bei einem Betriebsbeginn des Kraftfahrzeugs 1, bei welchem das Kraftfahrzeug 1 erstmalig in Betrieb genommen wird, das Steuergerät 3 spezifisch an das Kraftfahrzeug 1 angepasst ist, während der Aktuator 4 generisch ist. Das bedeutet, dass der Aktuator 4 anders als das Steuergerät 3 nicht auf das Kraftfahrzeug 1 abgestimmt ist. Vielmehr soll eine solche Abstimmung erst während des Betriebs des Kraftfahrzeugs 1 beziehungsweise der Anordnung 2 erfolgen. In dem Steuergerät 3 ist ein Maximalsollwert hinterlegt, der einen Wertebereich begrenzt, innerhalb welchem der von dem Steuergerät 3 an den Aktuator 4 übermittelte Sollwert liegt beziehungsweise liegen darf. Der Maximalsollwert ist auf das jeweilige Kraftfahrzeug 1 abgestimmt.

In dem Aktuator 4 ist hingegen ein Schwellenwert hinterlegt, welcher bei Betriebsbeginn einem Ausgangswert entspricht. Der Ausgangswert und mithin der initiale Schwellenwert sind derart gewählt, dass der Aktuator 4 für unterschiedliche Kraftfahrzeuge 1 beziehungsweise unterschiedliche Kraftfahrzeugbaureihen einsetzbar ist.

Der Aktuator 4 beziehungsweise sein Stellantrieb 6 werden in Abhängigkeit von dem über den Signaleingang 7 empfangenen Sollwert betrieben. Zusätzlich wird der Schwellenwert herangezogen. Insbesondere ist es vorgesehen, einen Istwert des Stellantriebs durch entsprechendes Einstellen des Stellantriebs 6 in Richtung des Sollwerts zu verändern beziehungsweise auf den Sollwert einzustellen. Der Istwert ist hierbei jedoch durch den Schwellenwert begrenzt, welcher einen Betriebsbereich des Aktuators 4 definiert. Das bedeutet, dass während des Betreibens des Aktuators 4 der Istwert den von dem Schwellenwert begrenzen Betriebsbereich nicht verlassen soll beziehungsweise auf diesen begrenzt wird. Zudem wird mit abnehmendem Abstand des Istwerts zu dem Schwellenwert eine Stellgeschwindigkeit des Stellantriebs reduziert, um ein Überfahren des Schwellenwerts durch den Istwert zu verhindern.

Besonders bevorzugt wird der Betriebsbereich des Aktuators 4 von mehreren Schwellenwerten begrenzt. Hierzu liegt neben dem Schwellenwert, welcher auch als erster Schwellenwert bezeichnet werden kann, ein weiterer Schwellenwert vor, der auch als zweiter Schwellenwert bezeichnet werden kann. Das bedeutet, dass der Betriebsbereich auf gegenüberliegenden Seiten von den Schwellenwerten begrenzt ist, sodass die Schwellenwerte den Betriebsbereich zwischen sich einschließen. Beispielsweise ist einer der Schwellenwerte positiv und ein anderer der Schwellenwerte negativ. In jedem Fall sind die Schwellenwerte voneinander verschieden.

Die Figur 2 zeigt ein Diagramm, in welchem Verläufe 9, 10 und 11 über der Zeit t aufgetragen sind. Der Verlauf 9 beschreibt hierbei den Verlauf des dem Aktuator 4 über den Signaleingang 7 zugeführten Sollwerts, der Verlauf 10 ist der Verlauf des ersten Schwellenwerts und der Verlauf 11 ist der Verlauf des zweiten Schwellenwerts. Zu Beginn entspricht der erste Schwellenwert einem ersten Ausgangswert und der zweite Schwellenwert einem zweiten Ausgangswert. Der erste Ausgangswert ist beispielsweise positiv und der zweite Ausgangswert negativ. Rein beispielhaft wird ein sinusförmiger Verlauf 9 für den Sollwert vorgegeben, wobei sich seine Amplitude über der Zeit größer wird. Zunächst liegt der Sollwert vollständig innerhalb des von den Schwellenwerten definierten Betriebsbereichs des Aktuators 4.

Über der Zeit treten jedoch Sollwerte auf, welche außerhalb des Betriebsbereichs liegen, also den ersten Schwellenwert überschreiten oder den zweiten Schwellenwert unterschreiten. Überschreitet der Sollwert den ersten Schwellenwert, so wird der erste Schwellenwert gleich dem Sollwert gesetzt und der Istwert in Richtung des Sollwerts, insbesondere bis auf den Sollwert, durch Betreiben des Stellantriebs 5 verändert. Unterschreitet der Sollwert hingegen den zweiten Schwellenwert, so wird der zweite Schwellenwert gleich dem Sollwert gesetzt und der Istwert in Richtung des Sollwerts, insbesondere bis auf den Sollwert, durch Betreiben des Stellantriebs 5 verändert.

Hierdurch nimmt der Abstand zwischen den beiden Schwellenwerten über der Zeit stetig zu, bis der von den Schwellenwerten definierte Betriebsbereich des Aktuators 4 einem in dem Steuergerät 3 hinterlegten Betriebsbereich beziehungsweise Wertebereich entspricht. In dem Steuergerät 3 ist insoweit zumindest ein Maximalsollwert hinterlegt, welchem sich der erste Schwellenwert angleicht. Vorzugsweise ist selbstverständlich ebenso ein Minimalsollwert hinterlegt, welchem sich der zweite Schwellenwert über der Zeit angleicht. Der Minimalsollwert und der Maximalsollwert begrenzen einen Wertebereich, innerhalb welchem das Steuergerät 3 einen Vorgabewert auswählt und als Sollwert an den Aktuator 4 übermittelt.

Die beschriebene Vorgehensweise hat den Vorteil, dass der Aktuator 4 lediglich in generischer Form und nicht in auf das Kraftfahrzeug 1 abgestimmter Form vorgehalten werden muss. Eine Anpassung des Aktuators 4 an das Kraftfahrzeug 1 erfolgt insoweit adaptiv während des Betriebs des Kraftfahrzeugs 1. Hierdurch können aufwändige Anpassungsarbeiten des Aktuators 4 entfallen. Zugleich werden Herstellungskosten und Lagerhaltungskosten für den Aktuator 4 reduziert.

### BEZUGSZEICHENLISTE:

- 1: Kraftfahrzeug
- 2: Anordnung
- 3: Steuergerät
- 4: Aktuator
- 5: Stelleinheit
- 6: Stellantrieb
- 7: Signaleingang
- 8: Signalleitung
- 9: Verlauf
- 10: Verlauf
- 11: Verlauf

## Patentansprüche

1. Verfahren zum Betreiben eines Aktuators (4) für ein Kraftfahrzeug (1) mittels eines Steuergeräts (3), wobei der Aktuator (4) über eine Stelleinheit (5), einen Stellantrieb (6) und einen Signaleingang (7) verfügt, wobei ein Istwert des Stellantriebs (6) in Abhängigkeit von einem von dem Steuergerät (3) über den Signaleingang (7) empfangenen Sollwert und einem in dem Aktuator (4) gespeicherten Schwellenwert eingestellt wird, wobei der Schwellenwert eine Grenze des Betriebsbereichs des Aktuators (4) definiert, welche von dem Istwert des Stellantriebs (6) nicht überschritten werden darf, **dadurch gekennzeichnet, dass** der Schwellenwert gleich dem Sollwert gesetzt wird, falls der Sollwert den Betriebsbereich des Aktuators (4) verlässt.

2. Verfahren nach Anspruch 1, **dadurch gekennzeichnet, dass** mit abnehmendem Abstand des Istwerts zu dem Schwellenwert eine Stellgeschwindigkeit des Stellantriebs (6) reduziert wird.

3. Verfahren nach einem der vorhergehenden Ansprüche, **dadurch gekennzeichnet, dass** der gleich dem Sollwert gesetzte Schwellenwert in dem Aktuator (4) in einem nicht flüchtigen Speicher gespeichert wird.

4. Verfahren nach einem der vorhergehenden Ansprüche, **dadurch gekennzeichnet, dass** der Aktuator eine über den Signaleingang (7) empfangene Kennung mit einer in dem Aktuator (4) gespeicherten Kennung vergleicht und bei einer Abweichung der Kennung von der gespeicherten Kennung der Schwellenwert auf einen Ausgangswert zurückgesetzt wird.

5. Verfahren nach einem der vorhergehenden Ansprüche, **dadurch gekennzeichnet, dass** der Aktuator (4) zum Antreiben einer Hinterachslenkung des Kraftfahrzeugs (1) verwendet wird.

6. Verfahren nach Anspruch 1, **dadurch gekennzeichnet, dass** in dem Steuergerät (3) ein Maximalsollwert hinterlegt und der in dem Aktuator hinterlegt Schwellenwert auf einen von dem Maximalsollwert verschiedenen Ausgangswert gesetzt wird.

7. Verfahren nach Anspruch 6, **dadurch gekennzeichnet, dass** ein innerhalb eines von dem Maximalsollwert begrenzten Wertebereichs liegender Vorgabewert dem Aktuator (4) als Sollwert übermittelt wird.

8. Aktuator (4) für ein Kraftfahrzeug (1) umfassend eine Stelleinheit (5), einen Stellantrieb (6) und einen Signaleingang (7), **dadurch gekennzeichnet, dass** der Aktuator (4) zur Durchführung des Verfahrens nach einem oder mehreren der vorhergehenden Ansprüche eingerichtet ist.

## Claims

1. Method for operating an actuator (4) for a motor vehicle (1) by means of a control device (3), wherein the actuator (4) has an actuating unit (5), an actuating drive (6) and a signal input (7), wherein an actual value of the actuating drive (6) is set as a function of a setpoint value received from the control device (3) via the signal input (7) and a threshold value stored in the actuator (4), wherein the threshold value defines a limit of the operating range of the actuator (4) which may not be exceeded by the actual value of the actuating drive (6), **characterized in that** the threshold value is set equal to the setpoint value, if the setpoint value leaves the operating range of the actuator (4).

2. Method according to claim 1, **characterised in that** with decreasing distance of the actual value to the threshold value, an actuating speed of the actuating drive (6) is reduced.

3. Method according to any one of the preceding claims, **characterised in that** the threshold value set equal to the setpoint value is stored in the actuator (4) in a nonvolatile memory.

4. Method according to any one of the preceding claims, **characterised in that** the actuator compares an identifier received via the signal input (7) with an identifier stored in the actuator (4) and, if the identifier deviates from the stored identifier, the threshold value is reset to an initial value.

5. Method according to any one of the preceding claims, **characterised in that** the actuator (4) is used to drive a rear axle steering of the motor vehicle (1).

6. Method according to claim 1, **characterised in that** a maximum setpoint value is stored in the control device (3) and the threshold value stored in the actuator is set to an initial value different from the maximum setpoint value.

7. Method according to claim 6, **characterised in that** a preset value lying within a value range limited by the maximum setpoint value is transmitted to the actuator (4) as setpoint value.

8. Actuator (4) for a motor vehicle (1) comprising an actuating unit (5), an actuating drive (6) and a signal input (7), **characterised in that** the actuator (4) is configured to carry out the method according to one or more of the preceding claims.

## Revendications

1. Procédé pour faire fonctionner un actionneur (4) pour un véhicule automobile (1) au moyen d'un appareil de commande (3), dans lequel l'actionneur (4) dispose d'une unité de réglage (5), d'un servomoteur (6) et d'une entrée de signal (7), dans lequel une valeur réelle du servomoteur (6) est réglée en fonction d'une valeur de consigne reçue de l'appareil de commande (3) via l'entrée de signal (7) et d'une valeur de seuil stockée dans l'actionneur (4), dans lequel la valeur de seuil définit une limite de la plage de fonctionnement de l'actionneur (4) qui ne doit pas être dépassée par la valeur réelle du servomoteur (6), **caractérisé en ce que** la valeur de seuil est fixée égale à la valeur de consigne dans le cas où la valeur de consigne quitte la plage de fonctionnement de l'actionneur (4).

2. Procédé selon la revendication 1, **caractérisé en ce qu'**une vitesse de réglage du servomoteur (6) est réduite à mesure que la distance entre la valeur réelle et la valeur de seuil diminue.

3. Procédé selon l'une quelconque des revendications précédentes, **caractérisé en ce que** la valeur de seuil fixée égale à la valeur de consigne est stockée dans l'actionneur (4) dans une mémoire non volatile.

4. Procédé selon l'une quelconque des revendications précédentes, **caractérisé en ce que** l'actionneur compare un identifiant reçu via l'entrée de signal (7) avec un identifiant stocké dans l'actionneur (4) et en cas d'écart entre l'identifiant et l'identifiant stocké, la valeur de seuil est réinitialisée à une valeur de sortie.

5. Procédé selon l'une quelconque des revendications précédentes, **caractérisé en ce que** l'actionneur (4) est utilisé pour entraîner une direction d'essieu arrière du véhicule automobile (1).

6. Procédé selon la revendication 1, **caractérisé en ce qu'**une valeur de consigne maximale est stockée dans l'appareil de commande (3) et la valeur de seuil stockée dans l'actionneur est fixée à une valeur de sortie différente de la valeur de consigne maximale.

7. Procédé selon la revendication 6, **caractérisé en ce qu'**une valeur par défaut se trouvant à l'intérieur d'une plage de valeurs limitée par la valeur de consigne maximale est transmise à l'actionneur (4) en tant que valeur de consigne.

8. Actionneur (4) pour un véhicule automobile (1) comprenant une unité de réglage (5), un servomoteur (6) et une entrée de signal (7), **caractérisé en ce que** l'actionneur (4) est conçu pour la mise en oeuvre du procédé selon l'une ou plusieurs des revendications précédentes.
